(19) Europäisches Patentamt / European Patent Office / Office européen des brevets

(11) **EP 3 819 596 B1**

(12) **EUROPÄISCHE PATENTSCHRIFT**

(45) Veröffentlichungstag und Bekanntmachung des Hinweises auf die Patenterteilung:
**08.01.2025 Patentblatt 2025/02**

(21) Anmeldenummer: **19207179.3**

(22) Anmeldetag: **05.11.2019**

(51) Internationale Patentklassifikation (IPC):
**G01C 25/00** (2006.01)  **G01C 21/16** (2006.01)

(52) Gemeinsame Patentklassifikation (CPC):
**G01C 25/005; G01C 21/16**

(54) **SYSTEM ZUM KALIBRIEREN EINER INERTIALEN MESSEINHEIT**

SYSTEM FOR CALIBRATING AN INERTIAL MEASURING UNIT

SYSTÈME DE CALIBRATION D'UNE UNITÉ DE MESURE INERTIELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.05.2021 Patentblatt 2021/19**

(73) Patentinhaber: **Elektrobit Automotive GmbH**
**91058 Erlangen (DE)**

(72) Erfinder:
• **Schauer, Martin**
**65824 Schwalbach a. Ts. (DE)**
• **Kraus, Manuel**
**65824 Schwalbach a. Ts. (DE)**
• **Patino Studencki, Lucila**
**65824 Schwalbach a. Ts. (DE)**
• **Siller, Christian**
**65824 Schwalbach a. Ts. (DE)**
• **Pfeuffer, Christian**
**65824 Schwalbach a. Ts. (DE)**
• **Nippe, Martin**
**65824 Schwalbach a. Ts. (DE)**
• **Baleghkalam, Ghazaleh**
**65824 Schwalbach a. Ts. (DE)**
• **Ohl, Sebastian**
**65824 Schwalbach a. Ts. (DE)**

(74) Vertreter: **Continental Corporation**
**c/o Continental Automotive Technologies GmbH**
**Intellectual Property**
**Guerickestraße 7**
**60488 Frankfurt a. Main (DE)**

(56) Entgegenhaltungen:
**US-A- 4 303 978        US-A1- 2010 063 763
US-A1- 2018 066 961**

**Beschreibung**

Die Erfindung betrifft ein System zum Überprüfen einer inertialen Messeinheit eines Fahrzeugs während der Fahrt sowie ein entsprechendes Verfahren.

Fahrzeuge sind heute zumeist mit satellitengestützten, inertialen Navigationssystemen ausgerüstet, deren Zuverlässigkeit und Genauigkeit von der Güte der von einer inertialen Messeinheit (auch IMU genannt) ermittelten Werte abhängt. Dies gilt insbesondere, aber nicht ausschließlich, bei Ausfall oder nur geringer Verfügbarkeit der Signale des Satellitennavigationssystems.

Um bei der Berechnung einer genauen Fahrzeugposition mitwirken zu können, müssen alle beteiligten Sensoren kalibriert werden. Kalibrierung in diesem Sinne bedeutet, dass alle Parameter bekannt sein müssen, um die Messung des Sensors in die zugrunde liegenden physikalischen Einheiten umrechnen zu können. Um gute Genauigkeiten zu erreichen müssen Kalibrierparameter gerade für günstige, in Serienprojekten verbreitete Sensoren, während des Betriebs ständig mitbestimmt werden.

Eine Möglichkeit besteht in der Verwendung einer kostenintensiven inertialen Messeinheit, deren Sensoren keiner oder nur einer bei Fahrtantritt einmaligen Kalibrierung bedürfen. Diese weisen genug Stabilität über die komplette Fahrtdauer auf, so dass keine ständige Kalibrierung notwendig ist. Andere Lösungen verzichten auf eine 3D-Positions- und 3D-Orientierungsschätzung und reduzieren sich auf eine 2D-Positions- und 1D-Orientierungsschätzung. Die für diesen reduzierten Satz notwendigen IMU-Sensoren lassen sich mit der für Landfahrzeuge typischen Dynamik in ausreichendem Maße kalibrieren. Eine 3D-Positions- und 3D-Orientierungsschätzung erfordert jedoch eine inertiale Messeinheit, die auf eine ständige bzw. häufige Kalibrierung angewiesen ist. Dies auch im laufenden Fahrbetrieb auszuführen, ist jedoch mit Hinblick auf die typische Fahrdynamik eines Landfahrzeugs kaum möglich.

Aus der US 4 303 978 A ist die Verwendung einer solchen kostenintensiven inertialen Messeinheit bekannt, deren Sensoren keiner oder nur einer bei Fahrtantritt einmaligen Kalibrierung bedürfen. Hier sind in einem Flugzeug Gyroskope verbaut, die beabsichtigt nicht entlang der Flugzeugachsen ausgerichtet sind. Dies dient zur Erhöhung der Redundanz bei gleichzeitig minimaler Anzahl von einzelnen Gyroskopen. Eine Kalibrierung des Gyroskops erfolgt vor Beginn des Fluges mittels einer Grob- und einer Feinjustierungsphase. Während des Fluges erfolgt eine Kalibrierung in Bezug auf Temperatur- und Druckeinflüsse auf Basis von Kalibrierungsfaktoren, die in Laborversuchen ermittelt wurden.

Aus der US 20107063763 A1 ist ein Drehratensensor bekannt, der mehrere Gyroskope aufweist, die nicht entlang der Achse des Drehratensensors ausgerichtet sind. Ein solcher Sensor kann beispielsweise in einer bekannten Messeinheit eines Fahrzeugs eingesetzt werden.

Aus der US 2018/0066961 A1 ist ferner die Selbstkalibrierung eines Inertialsystems bekannt, bei welchem neben drei achsenparallelen Gyroskopen ein zusätzliches verkipptes Gyroskop verbaut ist.

Der Erfindung liegt die Aufgabe zu Grunde, ein System eines Fahrzeugs bzw. ein Verfahren anzugeben, das das Kalibrieren der inertialen Messeinheit mit zufriedenstellender Genauigkeit und Zuverlässigkeit während der Fahrt ermöglicht. Die Aufgabe wird durch die Merkmale der unabhängigen Ansprüche gelöst.

Bevorzugte Weiterbildungen sind Gegenstand der abhängigen Ansprüche. Durch ausdrückliche Bezugnahme werden die Ansprüche an dieser Stelle zum Inhalt der Beschreibung gemacht.

Gemäß einem Aspekt der Erfindung umfasst ein System zum Kalibrieren einer inertialen Messeinheit eines Fahrzeugs, welches ein Landfahrzeugs ist, während der Fahrt, eine inertiale Messeinheit. Diese weist zumindest einen ersten Beschleunigungssensor zum Messen einer translatorischen Beschleunigung entlang einer ersten Sensorachse und / oder einen ersten Drehratensensor zum Messen einer Drehrate um die erste Sensorachse auf. Darüber hinaus weist sie einen zweiten Beschleunigungssensor zum Messen einer translatorischen Beschleunigung entlang einer zweiten Sensorachse und / oder einen zweiten Drehratensensor zum Messen einer Drehrate um die zweite Sensorachse auf. Die Drehratensensoren werden in ihrer Gesamtheit auch als Gyroskop bezeichnet. Zumindest eine weitere Erfassungseinrichtung zum Erfassen einer Bewegung des Fahrzeugs in einer ersten Fahrzeugrichtung und / oder um die erste Fahrzeugrichtung kann Kalibrierdaten zur Kalibrierung der inertialen Messeinheit liefern. Bei der ersten Fahrzeugrichtung handelt es sich bevorzugt um die Antriebs- bzw. vom Fahrzeug geradeaus nach vorne bzw. hinten weisende Richtung. Sowohl die erste als auch die zweite Sensorachse ist gegenüber der ersten Fahrzeugrichtung verkippt. Unter einer Verkippung wird bevorzugt eine nicht parallele bzw. angewinkelte Ausrichtung verstanden. Das System ist ausgebildet, die inertiale Messeinheit während der Fahrt anhand der Kalibrierdaten der zumindest einen weiteren Erfassungseinrichtung zu kalibrieren.

Dem angegebenen System liegt die Überlegung zugrunde, dass gängige Landfahrzeuge wie PKWs über einen Antrieb verfügen, der das Fahrzeug nur vorwärts bzw. rückwärts antreibt, nicht jedoch zur Seite oder nach oben bzw. unten. Ebenso erfolgen Drehungen des Fahrzeugs durch die gelenkte Vorderachse nur um die Fahrzeughochachse. Aktive Drehungen um die nach vorne gerichtete Achse oder die seitliche Achse sind nicht möglich, auch durch den Untergrund und durch Fahrmanöver sind solche Drehungen nur sehr gering. Beispielsweise wäre nach herkömmlicher Anordnung der erste Sensor für Messungen in bzw. entgegen der Fahrtrichtung des Fahrzeugs ausgerichtet. Der zweite Sensor wäre hingegen orthogonal dazu nach oben gerichtet oder orthogonal quer ausgerichtet, wäre also den deutlichsten Beschleunigungsrichtungen, die entlang der ersten Fahrzeugrichtung auftreten, kaum ausgesetzt und könnte somit nicht zuverlässig bzw. genau kalibriert werden.

Eine inertiale Messeinheit ist allgemein zur Messung von Rotationen und / oder Beschleunigungen in einem Inertialsystem ausgelegt, wobei häufig Beschleunigungen in allen drei translatorischen Richtungsachsen sowie die jeweiligen Drehraten um diese Achsen messbar sind. Grundprinzip der Beschleunigungsmessung ist meist die Massenträgheit. So bewegt sich beispielsweise eine seismische Masse bei Beschleunigung auf oder gegen ein erfassendes Sensorelement. Zur Weiterverarbeitung oder Speicherung der Messdaten werden die analogen Eingangssignale normalerweise in einen digitalen Datenstrom umgesetzt. Die Rechenschritte, mit denen aus den inertialen Messungen der inertialen Messeinheit deren Position und Orientierung bestimmt werden, werden auch als Strapdown-Algorithmus bezeichnet.

Um alle drei Achsen von Gyroskopen bzw. Beschleunigungssensoren einer inertialen Messeinheit kalibrieren zu können, muss entlang bzw. um jede Achse genügend Dynamik auftreten. Bei gängigen Einbauverfahren entlang der Fahrzeughauptachsen tritt diese Dynamik aufgrund der eingeschränkten Bewegungsfreiheit eines Landfahrzeugs nur in wenigen Achsen bzw. Drehrichtungen auf. Die Erfindung löst dieses Problem durch eine verkippte angeordnete inertiale Messeinheit bzw. verkippt angeordnete Sensorachsen. Durch diese Verkippung wirkt die üblicherweise auftretende Dynamik eines Landfahrzeugs auch auf die sonst nahezu unbeteiligten Achsen ein und erlaubt deren Kalibrierung.

Gemäß einer bevorzugten Ausführungsform weist die inertiale Messeinheit genau einen ersten Beschleunigungssensor, einen zweiten Beschleunigungssensor sowie einen Drehratensensor auf, wobei der erste und / oder zweite Beschleunigungssensor gegenüber der ersten Fahrzeugrichtung verkippt ist. Der Drehratensensor ist vorzugsweise nicht verkippt und entlang der Fahrzeughochachse ausgerichtet.

Es ist bevorzugt, dass die inertiale Messeinheit einen dritten Beschleunigungssensor zum Messen einer translatorischen Beschleunigung entlang einer dritten Sensorachse und / oder einen dritten Drehratensensor zum Messen einer Drehrate um die dritte Sensorachse aufweist, wobei die dritte Sensorachse gegenüber der ersten Fahrzeugrichtung verkippt ist. Somit sind alle drei Sensorachsen verkippt gegenüber der ersten Fahrzeugrichtung.

Es ist weiter bevorzugt, dass die Sensorachsen jeweils zusätzlich gegenüber einer zweiten und / oder dritten Fahrzeugrichtung verkippt sind, wobei die zweite und dritte Fahrzeugrichtung jeweils gegenüber den anderen Fahrzeugrichtungen orthogonal ausgerichtet sind. Alle Sensorachsen sind entsprechend den deutlichsten Beschleunigungen ausgesetzt, da diese üblicherweise in der ersten Fahrzeugrichtung auftreten. Mit anderen Worten steht keine der Sensorachsen genau orthogonal zu diesen Beschleunigungen, weshalb stets ein gewisser Beschleunigungsanteil gemessen werden kann.

Einer bevorzugten Ausführungsform entsprechend sind alle Sensorachsen jeweils zueinander orthogonal ausgerichtet. Dies ist praktikabel, da der Rechenaufwand in Grenzen gehalten wird und inertiale Messeinheiten üblicherweise derart ausgerichtete Sensorachsen aufweisen.

Die erste Fahrzeugrichtung entspricht vorzugsweise der lenkungsfreien Fahrtrichtung des Fahrzeugs, wobei die Ausrichtung jeder der Beschleunigungssensoren der inertialen Messeinheit jeweils die Messung eines Beschleunigungsanteils entlang der ersten Fahrzeugrichtung ermöglicht. Unter der lenkungsfreien Fahrtrichtung wird hierbei bevorzugt die Fahrtrichtung bei 0° Lenkeinschlag bzw. die Fahrtrichtung bei Geradeausfahrt verstanden. Gewöhnlicherweise handelt es sich hierbei um die Richtung der Längsachse des Fahrzeugs. In dieser Richtung treten die größten Beschleunigungen auf, daher ist diese Richtung für die Kalibrierung am relevantesten.

Es ist bevorzugt, dass jede der Sensorachsen um einen Winkel von mehr als 10°, bevorzugt 55°, gegenüber der ersten Fahrzeugrichtung verkippt ist. Insbesondere ein Verkippungs-Winkel von 55° erlaubt eine gleich verteilte Kalibrierbarkeit über alle Sensoren der inertialen Messeinheit.

Es ist bevorzugt, dass jede der Sensorachsen um den gleichen Winkelbetrag gegenüber der ersten Fahrzeugrichtung verkippt ist.

Die zumindest eine Erfassungseinrichtung zum Erfassen der Bewegung des Fahrzeugs ist bevorzugt als Beschleunigungs-, Geschwindigkeits- und / oder Wegsensor, als Odometer, Lenkwinkelsensor, Magnetometer, Barometer und / oder Satellitennavigationsmodul ausgebildet. Sie liefert die Vergleichswerte, anhand derer die Kalibrierung ermöglicht wird.

Eine inertiale Messeinheit zum Einsatz in einem hier beschriebenen System weist eine Befestigungseinrichtung mit einer Befestigungsebene zur Befestigung an einem Fahrzeug auf, wobei die Sensorachsen der inertialen Messeinheit gegenüber der Befestigungsebene jeweils um einen Winkel verkippt sind. Somit kann die Erfindung mit dem zusätzlichen Vorteil umgesetzt werden, dass keine Anpassung der Fahrzeugstruktur nötig ist - etwa eine spezielle Befestigungsschnittstelle, die eine verkippte Anbringung der inertialen Messeinheit ermöglicht.

Gemäß einem weiteren Aspekt der Erfindung umfasst ein Verfahren zum Überprüfen einer inertialen Messeinheit eines Fahrzeugs, welches ein Landfahrzeug ist, dass die inertiale Messeinheit einen ersten Beschleunigungssensor zum Messen einer translatorischen Beschleunigung entlang einer ersten Sensorachse und / oder einen ersten Drehratensensor zum Messen einer Drehrate um die erste Sensorachse aufweist sowie einen zweiten Beschleunigungssensor zum Messen einer translatorischen Beschleunigung entlang einer zweiten Sensorachse und / oder einen zweiten Drehratensensor zum Messen einer Drehrate um die zweite Sensorachse aufweist, wobei jeweils die erste und die zweite Sensorachse gegenüber einer ersten Fahrzeugrichtung verkippt ist, wobei in der ersten Fahrzeugrichtung eine Bewegung des Fahrzeugs mittels zumindest einer weiteren Erfassungseinrichtung erfasst wird, wobei die inertiale Messeinheit während der Fahrt anhand von Kalibrierdaten der zumindest einen weiteren Erfassungseinrichtung kalibriert wird.

Bevorzugt wird das Verfahren mittels eines Systems durchgeführt, wie vor- und nachstehend beschrieben.

Nach einer bevorzugten Ausführungsform wird das Verfahren während der Fahrt des Fahrzeugs mehrfach oder schleifenartig wiederholt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels im Zusammenhang mit den Zeichnungen.

Dabei zeigen in stark schematischer Weise

Fig. 1 eine als Kubus dargestellte inertiale Messeinheit in einer herkömmlichen Einbauweise,

Fig. 2 eine als Kubus dargestellte inertiale Messeinheit in einer erfindungsgemäßen Einbauweise.

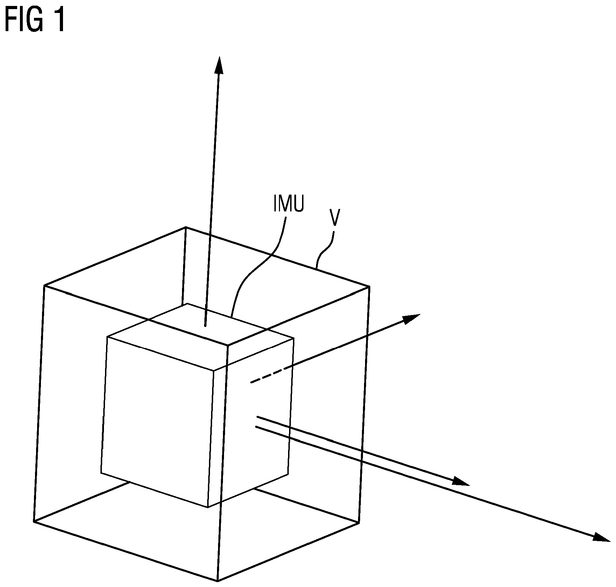

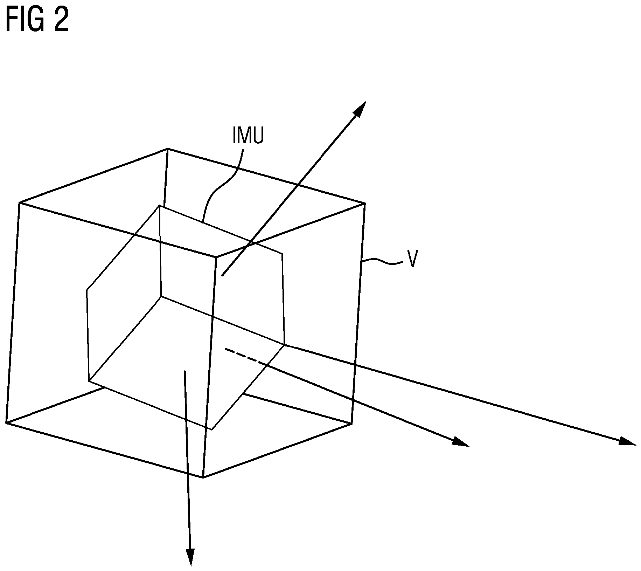

Die inertiale Messeinheit IMU ist in Fig. 1 und Fig. 2 innerhalb des Fahrzeugs V dargestellt, das der Einfachheit halber als Kubus verkörpert ist, ebenso wie die inertiale Messeinheit IMU. Die Sensorachsen sowie die erste Fahrzeugrichtung sind als Pfeile dargestellt.

Bei der in Fig. 1 gezeigten herkömmlichen Einbauart nach dem Stand der Technik ist eine der Sensorachsen der inertialen Messeinheit IMU koaxial zur lenkungsfreien Fahrtrichtung, also zur ersten Fahrzeugrichtung, ausgerichtet, während die beiden anderen Sensorachsen dazu orthogonal ausgerichtet sind. Die Sensorachsen sind also entlang der Fahrzeughauptachsen ausgerichtet. Dies hat zur Folge, dass nur die koaxial zur lenkungsfreien Fahrtrichtung ausgerichtete Sensorachse gut kalibriert werden kann, während dies für die beiden anderen Sensorachsen kaum möglich ist, weil sie bzw. eine zur Kalibrierung nutzbare Erfassungseinrichtung nur sehr geringe Beschleunigungen erfahren. Für den Drehratensensor hat die Anordnung entlang der Fahrzeughauptachsen zur Folge, dass nur die Achse koaxial zur Fahrzeughochachse gut kalibriert werden kann, während dies für die beiden anderen Sensorachsen kaum möglich ist, weil sie bzw. eine zur Kalibrierung nutzbare Erfassungseinrichtung nur sehr geringe Drehraten erfahren.

Bei der in Fig. 2 gezeigten Ausrichtung der inertialen Messeinheit IMU wird hingegen ermöglicht, dass alle drei Sensorachsen Anteile der Beschleunigung entlang der nach vorne gerichteten Achse des Fahrzeugs V messen. Dadurch ergeben sich einige Änderungen gegenüber der gängigen Art des Einbaus entlang der Fahrzeughauptachsen.

Für die Beschleunigungssensoren gilt, dass die durch Antrieb und die Bremsen des Fahrzeugs V auftretenden Beschleunigungen in allen Sensorachsen erfassbar sind. Diese Art der Beschleunigung kann durch eine Erfassungseinrichtung, beispielsweise in Form weiterer Sensoren, wie Odometer, oder GNSS-Modul gemessen werden, womit die notwendige Redundanz für eine Kalibrierung in allen Achsen gegeben ist. Ebenso verteilt sich auch die inertiale Beschleunigung beim Durchfahren von Kurven auf alle Achsen. Diese ist durch die Erfassungseinrichtung oder weitere Erfassungseinrichtungen, beispielsweise ein differentielles Odometer oder Lenkwinkelsensor und Odometer, berechenbar und steht somit ebenfalls für die Kalibrierung aller Achsen zur Verfügung. Auch die Beschleunigung, die durch Einwirken der Erdbeschleunigung auf den Sensor entsteht, ist in allen Achsen erfassbar. Diese Art der Beschleunigung kann durch die Erfassungseinrichtung oder weitere Erfassungseinrichtungen, beispielsweise GNSS und / oder Barometer bestimmt werden und ist somit für die Kalibrierung aller drei Achsen verfügbar.

Für die Drehratensensoren gilt, dass die Drehung des Fahrzeugs V um dessen Hochachse beim Durchfahren von Kurven auf alle drei Achsen des Gyroskops einwirkt. Diese Drehung kann durch die Erfassungseinrichtung oder weitere Erfassungseinrichtungen, beispielsweise GNSS und / oder Magnetometer bestimmt werden, womit die notwendige Redundanz für eine Kalibrierung in allen Achsen gegeben ist. Zur Stützung kann optional auch die Abweichung von der Nulllinie in allen drei Achsen im Stillstand bestimmt werden, der beispielsweise durch das Odometer detektiert werden kann.

Die Sensorachsen der inertialen Messeinheit IMU sind im Ausführungsbeispiel der Fig. 2 jeweils um 55° gegenüber der ersten Fahrzeugrichtung verkippt, so dass die Komplexität der weiteren Berechnung aus den erzeugten Signalen in Grenzen gehalten wird.

Die Verkippung der Sensorachsen um 55° entspricht der für alle Sensorachsen gleich großen und optimalen Verkippung gegenüber der ersten Fahrzeugrichtung. Diese lässt sich ausgehend von den Hauptachsen des Fahrzeugs als Drehung eines gedachten Würfels veranschaulichen, der durch die zueinander rechtwinkligen Einheitsvektoren der Sensorachsen aufgespannt wird. Für eine erste Drehung mit einem Winkel von $\alpha = 45°$ um die Hochachse des Fahrzeugs lautet die Drehmatrix

$$rot_z = \begin{pmatrix} \cos(\alpha) & \sin(\alpha) & 0 \\ -\sin(\alpha) & \cos(\alpha) & 0 \\ 0 & 0 & 1 \end{pmatrix}.$$

Durch eine weitere Drehung mit dem Winkel θ, diesmal um die Fahrzeugquerachse mit der Drehmatrix

$$rot_y = \begin{pmatrix} \cos(\theta) & 0 & \sin(\theta) \\ 0 & 1 & 0 \\ -\sin(\theta) & 0 & \cos(\theta) \end{pmatrix},$$

wird die dem Ursprungspunkt, also dem Schnittpunkt der Sensorachsen, gegenüberliegende Ecke des gedachten Würfels auf die Achse der ersten Fahrzeugrichtung, also in diesem Beispiel die Längsrichtung des Fahrzeugs, überführt. Der Winkel θ ergibt sich aus den geometrischen Beziehungen des Würfels zu

$$\theta = arctan\left(\frac{1}{\sqrt{2}}\right) = 35°$$

Als Einheitsvektoren des so gedrehten Würfels ergeben sich durch die beiden Drehungen

$$e_{x,neu} = \begin{pmatrix} 1/\sqrt{3} \\ -1/\sqrt{2} \\ -1/\sqrt{2}\sqrt{3} \end{pmatrix}, \; e_{y,neu} = \begin{pmatrix} 1/\sqrt{3} \\ 1/\sqrt{2} \\ -1/\sqrt{2}\sqrt{3} \end{pmatrix}, \; e_{z,neu} = \begin{pmatrix} 1/\sqrt{3} \\ 0 \\ \sqrt{2}/\sqrt{3} \end{pmatrix}$$

und somit ein Winkel von 54,7°, gerundet 55°, um den jeder dieser Einheitsvektoren mit der ersten Fahrzeugrichtung verkippt ist.

Einem gegebenenfalls aufwändigeren mathematischen Modell zur Nutzung der Sensordaten steht jedoch der Vorteil gegenüber, dass die Genauigkeit der 3D-Positions- und 3D-Orientierungsschätzung für Landfahrzeuge durch die Möglichkeit der ständigen Kalibrierung aller Sensorachsen erhöht wird.

## Patentansprüche

1. System zum Kalibrieren einer inertialen Messeinheit (IMU) eines Fahrzeugs (V), welches ein Landfahrzeug ist, wobei die inertiale Messeinheit (IMU) einen ersten Beschleunigungssensor zum Messen einer translatorischen Beschleunigung entlang einer ersten Sensorachse und / oder einen ersten Drehratensensor zum Messen einer Drehrate um die erste Sensorachse aufweist sowie einen zweiten Beschleunigungssensor zum Messen einer translatorischen Beschleunigung entlang einer zweiten Sensorachse und / oder einen zweiten Drehratensensor zum Messen einer Drehrate um die zweite Sensorachse aufweist, wobei sowohl die erste als auch die zweite Sensorachse gegenüber einer ersten Fahrzeugrichtung verkippt ist, **dadurch gekennzeichnet, dass** zumindest eine Erfassungseinrichtung zum Erfassen einer Bewegung des Fahrzeugs (V) in der ersten Fahrzeugrichtung und / oder um die erste Fahrzeugrichtung ausgebildet ist und das System ausgebildet ist, die inertiale Messeinheit (IMU) während der Fahrt anhand von Kalibrierdaten der zumindest einen Erfassungseinrichtung zu kalibrieren.

2. System gemäß Anspruch 1, **dadurch gekennzeichnet, dass** die inertiale Messeinheit (IMU) einen dritten Beschleunigungssensor zum Messen einer translatorischen Beschleunigung entlang einer dritten Sensorachse und / oder einen dritten Drehratensensor zum Messen einer Drehrate um die dritte Sensorachse aufweist, wobei die dritte Sensorachse gegenüber der ersten Fahrzeugrichtung verkippt ist.

3. System gemäß einem der vorhergehenden Ansprüche, **dadurch gekennzeichnet, dass** die Sensorachsen jeweils zusätzlich gegenüber einer zweiten und / oder dritten Fahrzeugrichtung verkippt sind, wobei die zweite und dritte Fahrzeugrichtung jeweils gegenüber den anderen Fahrzeugrichtungen orthogonal ausgerichtet sind.

4. System gemäß einem der vorhergehenden Ansprüche, **dadurch gekennzeichnet, dass** alle Sensorachsen jeweils zueinander orthogonal ausgerichtet sind.

**5.** System gemäß einem der vorhergehenden Ansprüche, **dadurch gekennzeichnet, dass** die erste Fahrzeugrichtung der lenkungsfreien Fahrtrichtung des Fahrzeugs (V) entspricht, wobei die Ausrichtung jeder der Beschleunigungssensoren der inertialen Messeinheit (IMU) jeweils die Messung eines Beschleunigungsanteils entlang der ersten Fahrzeugrichtung ermöglicht.

**6.** System gemäß Anspruch 5, **dadurch gekennzeichnet, dass** jede der Sensorachsen um einen Winkel von mehr als 10°, bevorzugt 55°, gegenüber der ersten Fahrzeugrichtung verkippt ist.

**7.** System gemäß einem der vorhergehenden Ansprüche, **dadurch gekennzeichnet, dass** jede der Sensorachsen um den gleichen Winkelbetrag gegenüber der ersten Fahrzeugrichtung verkippt ist.

**8.** System gemäß einem der vorhergehenden Ansprüche, **dadurch gekennzeichnet, dass** die zumindest eine Erfassungseinrichtung zum Erfassen der Bewegung des Fahrzeugs (V) als Beschleunigungs-, Geschwindigkeits- und / oder Wegsensor, als Odometer, Lenkwinkelsensor, Magnetometer, Barometer und / oder Satellitennavigationsmodul ausgebildet ist.

**9.** Verfahren zum Kalibrieren einer inertialen Messeinheit (IMU) eines Fahrzeugs (V), welches ein Landfahrzeug ist, wobei die inertiale Messeinheit (IMU) einen ersten Beschleunigungssensor zum Messen einer translatorischen Beschleunigung entlang einer ersten Sensorachse und / oder einen ersten Drehratensensor zum Messen einer Drehrate um die erste Sensorachse aufweist sowie einen zweiten Beschleunigungssensor zum Messen einer translatorischen Beschleunigung entlang einer zweiten Sensorachse und / oder einen zweiten Drehratensensor zum Messen einer Drehrate um die zweite Sensorachse aufweist, wobei sowohl die erste als auch die zweite Sensorachse gegenüber einer ersten Fahrzeugrichtung verkippt ist, **dadurch gekennzeichnet, dass** eine Bewegung des Fahrzeugs (V) in der ersten Fahrzeugrichtung und / oder um die erste Fahrzeugrichtung mittels zumindest einer Erfassungseinrichtung erfasst wird und die inertiale Messeinheit (IMU) während der Fahrt anhand von Kalibrierdaten der zumindest einen Erfassungseinrichtung kalibriert wird

**10.** Verfahren gemäß Anspruch 9, **dadurch gekennzeichnet, dass** das Verfahren mittels eines Systems gemäß einem der Ansprüche 1 bis 8 durchgeführt wird.

**11.** Verfahren gemäß Anspruch 9 oder 10, **dadurch gekennzeichnet, dass** das Verfahren während der Fahrt des Fahrzeugs (V) mehrfach oder schleifenartig wiederholt wird.


**Claims**

**1.** System for calibrating an inertial measurement unit (IMU) of a vehicle (V), which is a land vehicle, the inertial measurement unit (IMU) having a first acceleration sensor for measuring a translational acceleration along a first sensor axis and/or a first rate-of-rotation sensor for measuring a rate of rotation about the first sensor axis and also a second acceleration sensor for measuring a translational acceleration along a second sensor axis and/or a second rate-of-rotation sensor for measuring a rate of rotation about the second sensor axis, both the first and the second sensor axis being tilted with respect to a first vehicle direction, **characterized in that** at least one sensing device is designed to sense a movement of the vehicle (V) in the first vehicle direction and/or about the first vehicle direction, and the system is designed to calibrate the inertial measurement unit (IMU) during driving on the basis of calibration data from the at least one sensing device.

**2.** System according to Claim 1, **characterized in that** the inertial measurement unit (IMU) has a third acceleration sensor for measuring a translational acceleration along a third sensor axis and/or a third rate-of-rotation sensor for measuring a rate of rotation about the third sensor axis, the third sensor axis being tilted with respect to the first vehicle direction.

**3.** System according to either of the preceding claims, **characterized in that** the sensor axes are in each case additionally tilted with respect to a second and/or third vehicle direction, the second and third vehicle directions being respectively aligned orthogonally with respect to the other vehicle directions.

**4.** System according to one of the preceding claims, **characterized in that** all of the sensor axes are respectively aligned orthogonally in relation to one another.

5. System according to one of the preceding claims, **characterized in that** the first vehicle direction corresponds to the steering-free driving direction of the vehicle (V), the alignment of each of the acceleration sensors of the inertial measurement unit (IMU) respectively making the measurement of an acceleration component along the first vehicle direction possible.

6. System according to Claim 5, **characterized in that** each of the sensor axes is tilted by an angle of more than 10°, preferably 55°, with respect to the first vehicle direction.

7. System according to one of the preceding claims, **characterized in that** each of the sensor axes is tilted by the same angular amount with respect to the first vehicle direction.

8. System according to one of the preceding claims, **characterized in that** the at least one sensing device for sensing the movement of the vehicle (V) is formed as an acceleration, speed and/or displacement sensor, as an odometer, a steering angle sensor, a magnetometer, a barometer and/or a satellite navigation module.

9. Method for calibrating an inertial measurement unit (IMU) of a vehicle (V), which is a land vehicle, the inertial measurement unit (IMU) having a first acceleration sensor for measuring a translational acceleration along a first sensor axis and/or a first rate-of-rotation sensor for measuring a rate of rotation about the first sensor axis and also a second acceleration sensor for measuring a translational acceleration along a second sensor axis and/or a second rate-of-rotation sensor for measuring a rate of rotation about the second sensor axis, both the first and the second sensor axis being tilted with respect to a first vehicle direction, **characterized in that** a movement of the vehicle (V) in the first vehicle direction and/or about the first vehicle direction is sensed by means of at least one sensing device, and the inertial measurement unit (IMU) is calibrated during driving on the basis of calibration data from the at least one sensing device.

10. Method according to Claim 9, **characterized in that** the method is carried out by means of a system according to one of Claims 1 to 8.

11. Method according to Claim 9 or 10, **characterized in that** the method is repeated a number of times or in the manner of a loop during driving of the vehicle (V).


**Revendications**

1. Système permettant d'étalonner une unité de mesure inertielle (IMU) d'un véhicule (V) qui est un véhicule terrestre, dans lequel l'unité de mesure inertielle (IMU) présente un premier capteur d'accélération pour mesurer une accélération en translation le long d'un premier axe de capteur et/ou un premier capteur de vitesse angulaire pour mesurer une vitesse angulaire autour du premier axe de capteur, et présente un deuxième capteur d'accélération pour mesurer une accélération en translation le long d'un deuxième axe de capteur et/ou un deuxième capteur de vitesse angulaire pour mesurer une vitesse angulaire autour du deuxième axe de capteur, dans lequel à la fois le premier et le deuxième axe de capteur sont inclinés par rapport à une première direction de véhicule, **caractérisé en ce qu'**au moins un dispositif de détection pour détecter un mouvement du véhicule (V) dans la première direction de véhicule et/ou autour de la première direction de véhicule est réalisé, et le système est réalisé pour étalonner l'unité de mesure inertielle (IMU) pendant la conduite à l'aide de données d'étalonnage dudit au moins un dispositif de détection.

2. Système selon la revendication 1, **caractérisé en ce que** l'unité de mesure inertielle (IMU) présente un troisième capteur d'accélération pour mesurer une accélération en translation le long d'un troisième axe de capteur et/ou un troisième capteur de vitesse angulaire pour mesurer une vitesse angulaire autour du troisième axe de capteur, le troisième axe de capteur étant incliné par rapport à la première direction de véhicule.

3. Système selon l'une quelconque des revendications précédentes, **caractérisé en ce que** les axes de capteur sont respectivement inclinés en plus par rapport à une deuxième et/ou une troisième direction de véhicule, la deuxième et la troisième direction de véhicule étant respectivement alignées de manière orthogonale par rapport aux autres directions de véhicule.

4. Système selon l'une quelconque des revendications précédentes, **caractérisé en ce que** tous les axes de capteur sont respectivement alignés de manière orthogonale les uns par rapport aux autres.

5. Système selon l'une quelconque des revendications précédentes, **caractérisé en ce que** la première direction de véhicule correspond à la direction de conduite sans braquage du véhicule (V), dans lequel l'alignement de chacun des capteurs d'accélération de l'unité de mesure inertielle (IMU) permet de mesurer une part d'accélération le long de la première direction de véhicule.

6. Système selon la revendication 5, **caractérisé en ce que** chacun des axes de capteur est incliné d'un angle de plus de 10°, de préférence de 55°, par rapport à la première direction de véhicule.

7. Système selon l'une quelconque des revendications précédentes, **caractérisé en ce que** chacun des axes de capteur est incliné de la même valeur d'angle par rapport à la première direction de véhicule.

8. Système selon l'une quelconque des revendications précédentes, **caractérisé en ce que** ledit au moins un dispositif de détection pour détecter le mouvement du véhicule (V) est réalisé en tant que capteur d'accélération, de vitesse et/ou de déplacement, en tant qu'odomètre, de capteur d'angle de braquage, de magnétomètre, de baromètre et/ou de module de navigation par satellite.

9. Procédé permettant d'étalonner une unité de mesure inertielle (IMU) d'un véhicule (V) qui est un véhicule terrestre, dans lequel l'unité de mesure inertielle (IMU) présente un premier capteur d'accélération pour mesurer une accélération en translation le long d'un premier axe de capteur et/ou un premier capteur de vitesse angulaire pour mesurer une vitesse angulaire autour du premier axe de capteur, et présente un deuxième capteur d'accélération pour mesurer une accélération en translation le long d'un deuxième axe de capteur et/ou un deuxième capteur de vitesse angulaire pour mesurer une vitesse angulaire autour du deuxième axe de capteur, dans lequel à la fois le premier et le deuxième axe de capteur sont inclinés par rapport à une première direction de véhicule, **caractérisé en ce qu'**un mouvement du véhicule (V) dans la première direction de véhicule et/ou autour de la première direction de véhicule est détecté au moyen d'au moins un dispositif de détection, et l'unité de mesure inertielle (IMU) est étalonnée pendant la conduite à l'aide de données d'étalonnage dudit au moins un dispositif de détection.

10. Procédé selon la revendication 9, **caractérisé en ce que** le procédé est effectué au moyen d'un système selon l'une quelconque des revendications 1 à 8.

11. Procédé selon la revendication 9 ou 10, **caractérisé en ce que** le procédé est répété à plusieurs reprises ou en boucle pendant la conduite du véhicule (V).

FIG 1

IMU V

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4303978 A
- US 20107063763 A1
- US 20180066961 A1